# FASCICULE DE BREVET EUROPEEN

(11) **EP 1 423 442 B1**
(45) Date de publication et mention de la délivrance du brevet: **12.09.2012**
(21) Numéro de dépôt: 02774485.3
(22) Date de dépôt: 16.07.2002
(51) Int. Cl.: C08F 36/04, C08F 4/56, C08C 19/44

(54) **Procédé de préparation en continu d'un élastomère diénique à unités vinyliques cycliques.**
Verfahren zur kontinuierlichen Herstellung von einem Dienelastomer mit cyclischen Vinyleinheiten
Process for the continuous preparation of a diene elastomer with cyclic vinyl units

(30) Priorité: 16.07.2001 FR 0110287
(43) Date de publication de la demande: 02.06.2004
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: CABIOCH, Jean-Luc, F-63140 Chatel-Guyon (FR); COISSIEUX, Laurent, F-63100 Clermont-Ferrand (FR); DAJOUX, Nicole, F-63122 Ceyrat (FR)
(74) Mandataire: Le Cam, Véronique Marie Christine
(86) Numéro de dépôt international: PCT/EP2002/007866
(87) Numéro de publication internationale: WO 2003/008470

(56) Documents cités:
- EP-A- 0 014 886
- EP-A1- 0 304 589
- EP-A2- 0 798 339
- GB-A- 2 020 670
- US-A- 3 294 768
- US-A- 3 801 554
- US-A- 3 966 691
- US-A- 4 969 986
- US-A- 5 620 939
- US-A- 6 140 434

## Description

La présente invention concerne des élastomères diéniques linéaires ou ramifiés présentant un taux massique d'unités vinyliques cycliques, telles que des unités vinylcycloalcane, qui est égal ou supérieur à 15 %. Plus particulièrement, elle concerne un procédé de préparation en continu par voie anionique de ces élastomères diéniques mettant en oeuvre des systèmes catalytiques spécifiques.

L'incorporation dans un polymère obtenu par voie anionique d'un monomère diène conjugué, tel que le butadiène, peut se faire sous la forme cis-1,4, trans-1,4 ou 1,2 (enchaînements vinyliques).

Les réactions de polymérisation anionique sont usuellement initiées par un organolithien, en présence d'un solvant hydrocarboné et d'un ou plusieurs monomères diènes conjugués. Les élastomères produits par ces réactions présentent en moyenne un taux massique d'enchaînements vinyliques qui est réduit, étant en général compris entre 8 % et 15 %. En vue d'obtenir des élastomères présentant une température de transition vitreuse (Tg) déterminée, il est connu d'ajouter au milieu de polymérisation un agent polaire, lequel a également pour effet d'élever d'une manière significative le taux moyen de ces enchaînements. Ce taux peut alors atteindre 90 %, par exemple.

Les documents de brevet américain US-A-5 620 939, US-A-5 906 956 et US-A-6 140 434 divulguent des procédés de polymérisation par voie anionique réalisés en discontinu, qui sont prévus pour élever le taux d'enchaînements vinyliques dans un élastomère diénique pouvant être un polybutadiène, un copolymère de styrène et de butadiène ou un polyisoprène. Ces procédés de polymérisation en discontinu sont mis en oeuvre à une température comprise entre 30 et 100° C, et ils consistent notamment à utiliser des systèmes catalytiques comprenant :
- un agent polaire comportant un ou plusieurs hétéro-atomes, tel que le tétrahydrofurane (THF) ou la tétraméthyléthylènediamine (TMEDA),
- un initiateur organolithié, tel que le n-butyllithium, et
- un sel d'un métal alcalin d'un alcool aliphatique ou alicyclique, tel que le tert-amylate ou le mentholate de sodium.

Plus précisément, le document US-A-5 620 939 divulgue, dans ses exemples, des rapports molaires [(sel / initiateur), (sel / agent polaire), (agent polaire / initiateur)] qui sont égaux à [1 ; 0,33 ; 3], [2 ; 0,66 ; 3], [3 ; 1 ; 3], [0,5 ; 0,17 ; 3], [1 ; 0,5 ; 2] et [1 ; 0,2 ; 5].

Le document US-A-5 906 956 divulgue, dans ses exemples, les valeurs suivantes pour lesdits rapports molaires : [2 ; 1 ; 2], [0,5 ; 1 ; 0,5], [0,25 ; 0,08 ; 3], [0,5 ; 0,17 ; 3], [1 ; 0,33 ; 3], [1 ; 0,66 ; 3], [3 ; 1 ; 3], [0,5 ; 0,17 ; 3], [1 ; 0,5 ; 2] et [1 ; 0,2 ; 5].

Le document GB-A-2345488 qui correspond au document US-A-6 140 434 divulgue, dans ses exemples, les valeurs suivantes pour lesdits rapports molaires : [0,25 ; 0,03 ; 8], [0,25 ; 0,05 ; 5], [0,25 ; 0,08 ; 3], [0,25 ; 0,25 ; 1], [0,25 ; 0,5 ; 0,5], [0,15 ; 0,05 ; 3], [0,5 ; 0,17; 3], [1 ; 0,33 ; 3] et [0,25 ; 0,13 ; 2].

Le document EP-A-0798339 divulgue un procédé de préparation en discontinu d'un copolymère de styrène et de butadiène à l'aide d'un système catalytique comprenant un initiateur organolithium, un composé du potassium et un composé choisi parmi les ethers et les amines agissant tous deux comme agents randomisants pour obtenir une augmentation de la teneur en unités vinyliques du copolymère et une distribution statistique des deux monomères dans le copolymère. Le rapport agent randomisant /Li dépend du type d'ether ou d'amine utilisé et ne peut être spécifié. Un rapport agent randomisant/ lithium aussi élevé que 10 et 50 mole équivalent est divulgué. La présence de structures cycliques de type vinylyclopentane n'est pas mentionnée dans le document.

Le document US-3294768 divulgue un procédé de préparation en discontinu d'un polymère ou copolymère diénique à l'aide d'un système catalytique comprenant un initiateur organolithium et un composé du sodium ou du potassium ou du rubidium ou du cesium agissant comme agent randomisant pour obtenir une distribution complètement statistique des deux monomères dans le copolymère et une faible teneur en unités vinyliques du copolymère. Le document divulgue également un essai témoin utilisant du THF à titre d'agent randomisant dans un rapport THF/Li aussi élevé que 8. La présence de structures cycliques de type vinylyclopentane n'est pas mentionnée dans ce document.

Le document EP-A- 0304589 divulgue un procédé de préparation en discontinu d'un terpolymère de butadiène, d'isoprène et de styrène ayant plus de 70% d'unités 1,2- et 3,4-isoprène et plus de 60% d'unités butadiéniques à l'aide d'un système catalytique comprenant un initiateur organolithié, tel que le n-butyllithium, et à titre de cocatalyseur un composé glycol dialkyl éther qui peut être utilisé dans un rapport molaire cocatalyseur/Li compris entre 2:1 et 15:1. La présence de structures cycliques de type vinylyclopentane n'est pas mentionnée dans ce document.

Le document US-4696986 divulgue un procédé de polymérisation par voie anionique réalisé en discontinu, qui est prévu pour élever le taux d'enchaînements vinyliques dans un élastomère diénique comprenant un initiateur organolithié, tel que le n-butyllithium, et à titre de cocatalyseur un agent modificateur trialkoxybenzène sélectionné parmi les 1,2,3- ou les 1,2,4- trialkoxybenzènes qui peut être utilisé dans un rapport molaire agent modificateur/Li allant de 0,1:1 à 40:1. La présence de structures cycliques de type vinylyclopentane n'est pas mentionnée dans ce document.

Indépendamment de l'élévation du taux d'enchaînements vinyliques dans ces élastomères de l'état de la technique, on a cherché par le passé à former des structures cycliques de type vinylcyclopentane (ces structures cycliques ne sont mentionnées dans aucun des documents de brevet précités) dans les élastomères diéniques obtenus par voie anionique.
- Une solution pour former ces structures cycliques consiste à mettre en oeuvre des réactions post-polymérisation, par exemple en traitant les élastomères par des acides de Lewis.
- Une autre solution peut consister à former ces structures cycliques directement lors de la polymérisation anionique, en réalisant celle-ci en continu avec une concentration de monomère réduite dans le milieu réactionnel et en utilisant un système catalytique spécifique.

Le document de brevet américain US-A-3 966 691 décrit dans ses exemples de réalisation un procédé de cyclisation du butadiène dans le milieu de polymérisation, qui consiste à utiliser un système catalytique comprenant un initiateur constitué de n-butylsodium et un activateur constitué de tétraméthyléthylènediamine (TMEDA). A titre optionnel, un alcoxyde de lithium est adjoint au milieu de polymérisation pour accélérer celle-ci.

La polymérisation est réalisée en continu, à une température comprise entre -20° C et 150° C, et les polybutadiènes obtenus présentent un taux massique de cycles supérieur à 40 % mais une masse moléculaire moyenne en nombre n'excédant pas 2 000 g/mol.

Les articles « G. Quack, L. J. Fetters, Macromolecules, Vol 11, n° 2, pp. 369-373, (1978) » et « A. R. Luxton, M. E. Burrage, G. Quack, L. J. Fetters, Polymer, Vol 22, pp.382-386 » décrivent également des procédés de cyclisation en continu dans le milieu de polymérisation, consistant à utiliser des systèmes catalytiques comprenant un initiateur organolithié, tel que le n-butyllithium, et un agent polaire constitué de TMEDA (on pourra se reporter à la page 383, colonne de droite du dernier document cité, pour une description du mécanisme de cyclisation).

Les polymérisations sont réalisées à des températures comprises entre 30 et 90° C, et les polybutadiènes obtenus présentent un taux massique de cycles vinylcyclopentane d'au moins 18 % mais une masse moléculaire moyenne en nombre n'excédant pas 5 000 g/mol.

Un inconvénient majeur de ces procédés de cyclisation réside donc dans la valeur très réduite de la masse moléculaire moyenne en nombre des élastomères diéniques obtenus.

Le but de la présente invention est de remédier à cet inconvénient, et il est atteint en ce que les demanderesses viennent de découvrir d'une manière surprenante que la polymérisation anionique d'un ou de plusieurs monomères comprenant au moins un monomère diène conjugué, comprenant la réaction, dans un solvant hydrocarboné inerte aliphatique ou alicyclique, du ou des monomères avec un système catalytique comprenant un initiateur organolithié et un agent polaire comportant plusieurs hétéro-atomes. La réaction, réalisée en continu, permet de préparer un élastomère diénique linéaire présentant à la fois un taux massique d'unités vinyliques cycliques égal ou supérieur à 15 % et une masse Mn allant de 100 000 à 300 000 g/mol à condition d'incorporer audit système catalytique un sel d'un métal alcalin d'un alcool aliphatique ou alicyclique, pour que le système satisfasse à la fois aux trois conditions :
(i) le rapport molaire (agent polaire / initiateur) est égal ou supérieur à 3.
(ii) le rapport molaire (sel / initiateur) appartient à un domaine allant de 0,01 à 2, et
(iii) le rapport molaire (sel / agent polaire) appartient à un domaine allant de 0,001 à 0,5.

Ces unités vinyliques cycliques sont de type vinylcycloalcane, et elles répondent à la formule générique suivante : 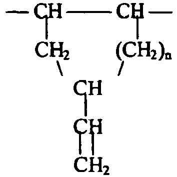 avec n = 1 ou 2.

A titre d'initiateur organolithié utilisable dans ce système catalytique selon l'invention, on peut citer les composés monolithiés comportant un groupe hydrocarboné aliphatique ou alicyclique ayant de 1 à 10 atomes de carbone, tels que le n-butyllithium (n-BuLi en abrégé ci-après), le sec-butyllithium, le tert-butyllithium, le n-propyllithium, l'amyltithium, le cyclohexyllithium, ou le phényléthyllithium.

La quantité d'initiateur qui est utilisée pour former le système catalytique est de préférence comprise entre 0,002 et 0,01 mol par kg de monomère(s).

A titre d'agent polaire comportant plusieurs hétéro-atomes (atomes d'oxygène ou d'azote) qui est utilisable dans ce système catalytique selon l'invention, on peut citer les agents polaires « multidentés » tels que les diéthers et les diamines, par exemple la tétraméthyléthylènediamine (TMEDA), le diméthoxyéthane (DME), le diéthylcarbitol (DEC), le triéthylèneglycoldiméthyléther (ou « triglyme »), le tétraéthylèneglycoldiméthyléther (ou « tétraglyme »), ou le dipipéridinoéthane.

Cet agent polaire est utilisé pour former le système catalytique selon l'invention à un taux compris entre 300 et 30000 parties pour un million de parties en poids de milieu réactionnel (ppm) et, de préférence, à un taux compris entre 500 et 3000 ppm.

On notera que les agents polaires comportant un seul hétéro-atome (agents « monodentés »), tels que les monoamines et les monoéthers, par exemple le tétrahydrofurane (THF), ne conviennent pas pour mettre en oeuvre les procédés selon l'invention, du fait qu'ils ne permettent pas d'obtenir le taux massique précité d'unités vinyliques cycliques dans l'élastomère diénique.

On notera que le procédé en continu selon l'invention permet d'obtenir des élastomères diéniques linéaires de masses moléculaires Mn supérieures à 100 000 g/mol, contrairement aux procédés mis en oeuvre au moyen des systèmes catalytiques connus.

On notera que ledit procédé qui comprend la polymérisation anionique dans un réacteur continu agité d'au moins un monomère diène conjugué par la réaction, dans un solvant hydrocarboné inerte aliphatique ou alicyclique, du ou des monomères avec un système catalytique comprenant ledit initiateur organolithié et ledit agent polaire comportant plusieurs hétéro-atomes, de manière que ladite relation (i) soit vérifiée, permet l'obtention d'élastomères linéaires de masses Mn égales ou supérieure égales ou supérieures à 100 000 g/mol dans le cas ou le système catalytique satisfait aux conditions (ii) et (iii) précitées.

Ce procédé en continu selon l'invention permet d'obtenir des élastomères diéniques présentant à la fois de très hautes masses moléculaires par rapport à l'état de la technique connu et un taux massique d'unités vinyliques cycliques égal ou supérieur à 20 %.

On notera également que le procédé selon l'invention permet avantageusement de contrôler la distribution des masses moléculaires des élastomères diéniques obtenus, lesquels présentent un indice de polymolécularité Ip relativement réduit (inférieur à 3).

Concernant ledit procédé en continu selon l'invention qui est caractérisé par lesdites conditions (i), (ü) et (iii), le rapport molaire (agent polaire/ initiateur) est avantageusement égal ou supérieur à 5 et, à titre encore plus avantageux, ce rapport molaire est égal ou supérieur à 10. On peut choisir par exemple de limiter à 100 la valeur de ce rapport molaire.

Toujours à titre encore plus avantageux, pour l'obtention par ledit procédé en continu selon l'invention d'élastomères diéniques linéaires de masses moléculaires Mn spécifiquement égales ou supérieure à 100 000 g/mol, les systèmes catalytiques selon l'invention sont tels que le rapport molaire (agent polaire / initiateur) est égal ou supérieur à 15, ce qui représente des quantités d'agent polaire très élevées dans ces systèmes catalytiques par rapport aux quantités utilisées dans les systèmes catalytiques connus. On peut par exemple choisir une valeur allant de 15 à 40 pour ce rapport molaire.

A titre de sel de métal alcalin d'un alcool aliphatique ou alicyclique utilisable dans ces procédés selon l'invention, on utilise de préférence un sel dont l'alcool comporte de 3 à 12 atomes de carbone et, à titre encore plus préférentiel, de 3 à 8 atomes de carbone.

Avantageusement, on utilise un sel de sodium ou de potassium d'un alcool aliphatique, tel que le tert-butylate de sodium, le tert-amylate de sodium ou l'isopentylate de sodium, ou bien d'un alcool alicyclique, tel qu'un cyclohexanolate dialkylé de sodium, par exemple le mentholate de sodium.

Selon une caractéristique préférentielle de l'invention, le système catalytique utilisé dans ledit procédé est tel que le rapport molaire (sel / agent polaire) appartient à un domaine allant de 0,001 à 0,1.

Selon une autre caractéristique préférentielle de l'invention, le système catalytique utilisé dans ce procédé en continu est tel que le rapport molaire (sel / initiateur) appartient à un domaine allant de 0,01 à 0,6. Selon un premier exemple de réalisation de cette caractéristique préférentielle, ce rapport appartient à un domaine allant de 0,01 à 0,2 et, selon un second exemple de réalisation, ce rapport appartient à un domaine allant de 0,3 à 0,6.

Ce domaine allant de 0,01 à 0,2 pour le rapport molaire (sel / initiateur) est particulièrement bien adapté pour l'obtention, par le procédé selon l'invention en continu, d'élastomères linéaires de masse moléculaire Mn égale ou supérieure à 100 000 g/mol et présentant un taux massique d'unités vinyliques cycliques qui est égal ou supérieur à 15 %, avantageusement égal ou supérieur à 20 %.

D'une manière générale, on notera par ailleurs que le taux massique d'unités vinyliques dans les élastomères diéniques obtenus par les procédés selon l'invention est compris entre 40 % et 65%.

A titre de solvant hydrocarboné inerte utilisable dans les procédés selon l'invention, on peut citer les solvants aliphatiques ou alicycliques tels que le pentane, l'hexane, le mélange commercial hexane/ méthylcyclopentane, l'heptane, le méthylcyclohexane, ou le cyclohexane.

On notera que des solvants aromatiques, tels que le toluène, ne sont pas utilisables.

L'élastomère diénique préparé selon le procédé de l'invention comprend de préférence une fraction massique d'unités issues de diènes conjugués qui est supérieure à 30 %, et il peut être tout homopolymère ou copolymère obtenu par polymérisation :
- d'un monomère diène conjugué ayant de 4 à 12 atomes de carbone ou de plusieurs de ces monomères diènes conjugués entre eux, ou bien
- d'un ou plusieurs de ces monomères diènes conjugués avec un ou plusieurs composés vinylaromatiques ayant chacun de 8 à 20 atomes de carbone.

A titre de monomères diènes conjugués conviennent notamment le butadiène-1,3, le 2-méthyl-1,3-butadiène, les 2,3-di(alkyle en C1 à C5)-1,3-butadiènes tels que le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, le mélange commercial "vinyltoluène", le para-tertiobutylstyrène, le divinylbenzène. On notera que le styrène est utilisé à titre préférentiel.

De préférence, on utilise dans le procédé selon l'invention le butadiène-1,3 et/ou l'isoprène à titre de monomère(s) diène(s) conjugué(s) et le styrène à titre de monomère vinylaromatique, pour l'obtention de copolymères de butadiène/ isoprène (BIR), de styrène/ butadiène (SBR), de styrène/ isoprène (SIR), ou de butadiène/ styrène/ isoprène (SBIR).

A titre encore plus préférentiel, on co-polymérise le butadiène-1,3 et le styrène pour l'obtention d'un SBR présentant au moins 70 % en poids de butadiène et au plus 30 % en poids de styrène et, de préférence, au moins 90 % de butadiène et au plus 10 % de styrène.

Les élastomères diéniques obtenus par les procédés selon l'invention peuvent être ensuite ramifiés (i.e. couplés ou étoilés) ou non.

Comme agent d'étoilage conviennent tout particulièrement le trichlorométhylsilane, le tétrachlorométhylsilane, le carbonate de diphényle ou, à titre encore plus préférentiel, le tris(2,4-ditertbutylphényl)phosphite, tel que cela est décrit dans le document de brevet américain US-B-6 384 164 au nom des demanderesses.

Un élastomère diénique ramifié préparé selon le procédé la présente invention, qui est également issu d'au moins un diène conjugué et susceptible d'être obtenu par réaction dudit élastomère diénique linéaire selon l'invention avec un agent ramifiant (i.e. de couplage ou d'étoilage), comporte des unités vinyliques cycliques selon un taux massique égal ou supérieur à 15 % et il présente une masse moléculaire moyenne en nombre avantageusement allant de 150 000 à 350 000 g/mol.

Avantageusement, ledit taux massique d'unités vinyliques cycliques est égal ou supérieur à 20 %.

Les caractéristiques précitées de la présente invention, ainsi que d'autres, seront mieux comprises à la lecture de la description suivante de plusieurs exemples de réalisation de l'invention, donnés à titre illustratif et non limitatif.
- On a utilisé la technique SEC (chromatographie d'exclusion par la taille) pour déterminer les masses moléculaires et les indices de polymolécularité des élastomères. Selon cette technique, on sépare physiquement les macromolécules suivant leurs tailles respectives à l'état gonflé, dans des colonnes remplies d'une phase stationnaire poreuse.

On utilise pour la séparation précitée un chromatographe commercialisé sous la dénomination « WATERS » et sous le modèle « 150C ». On utilise un jeu de deux colonnes « WATERS » dont le type est « STYRAGEL HT6E ».
- On a utilisé la technique « DSC » (« differential scanning calorimetry ») pour la mesure des températures de transition vitreuse (Tg) des élastomères obtenus.
- On a par ailleurs utilisé la technique de résonance magnétique nucléaire du carbone 13 (RMN¹³C) pour déterminer des caractéristiques de microstructure relatives aux élastomères obtenus. Le détail de cette caractérisation est explicité ci-après.

Les analyses RMN ¹³C sont réalisées sur un spectromètre « Bruker AM250 ». La fréquence nominale du carbone 13 est de 62,9 MHz. Pour être quantitatifs, les spectres sont enregistrés sans effet « Overhauser Nucléaire » (NOE). La largeur spectrale est de 240 ppm. L'impulsion d'angle utilisée est une impulsion à 90° dont la durée est de 5 µs. Un découplage à basse puissance et à large bande de proton est utilisé pour éliminer les couplages scalaires ¹H-¹³C durant l'acquisition ¹³C. Le temps de répétition de la séquence est de 4 secondes. Le nombre de transitoires accumulés pour augmenter le rapport signal/bruit est de 8192. Les spectres sont calibrés sur la bande du CDCl₃ à 77 ppm. L'interprétation des spectres RMN des SBR et des BR a fait l'objet de nombreuses publications dans la littérature, par exemple constituées des documents suivants :
**(1)** Q.- T. Pham, R. Pétiaud, H. Waton, M.-F. Llauro-Darricades, Proton and Carbon NMR Spectra of Polymers, Penton Press, London (1991).
**(2)** Sato H., Ishikawa, T., Takebayashi K., Tanaka Y., Macromolecules, 22, 1748-1753, (1989).
**(3)** Harwood, H., J. Rubber Chem. Technology, 55, 769-806, (1982).
**(4)** Kobayashi E., Furakawa J., Ochiai M., Tsujimoto T, European Polym. J., 19, 871-875, (1983).
**(5)** Jiao S., Chen X., Hu L., Yan B., Chinese J. Polym. Sci., 8, 17-24, (1990).
**(6)** Quack G., Fetters L. J., Macromolecules, 11, N°2, 369-373, (1978).

En particulier les structures de type vinylcyclopentane ont été mises en évidence et attribuées dans le document (6) ci-dessus.

Les microstructures mises en évidence pour les SBR et les BR sont les suivantes :

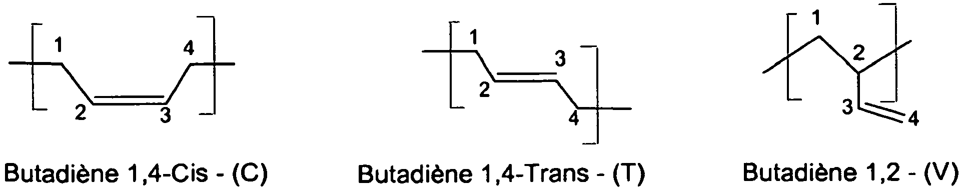

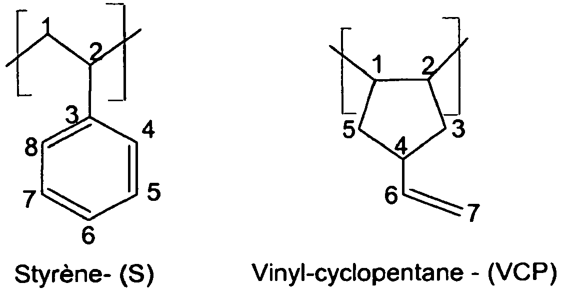

Le tableau ci-après résume les déplacements chimiques correspondant aux différents carbones de ces structures, dans la zone des carbones insaturés.

| Déplacements Chimiques | Attributions Structure - N° du carbone observé |
|---|---|
| 145 - 140.6 | V-3, VCP-6 |
| 116.6 - 113.2 | V-4 |
| 126.5 -124.9 | S-6 |
| 132.9 - 126.9 | S-4, S-5, S-7, S-8 |
| | C-2, C-3, T-2, T-3 |
| 145 - 140.6 | V-3, VCP-6 |
| 147.1 - 145 | S-3 |
| 113.2 - 111 | VCP-7 |

Le rapport cis/ trans de la partie diénique est déterminé dans la zone aliphatique du spectre, à partir des attributions bien connues de l'homme de l'art. (voir documents (1) à (5) ci-dessus).

| |
|---|
| **EXEMPLE 1 :** |
| **Préparation d'un SBR linéaire « témoin » de haute masse moléculaire (copolymère de styrène et de butadiène).** |

La polymérisation est conduite en continu dans un réacteur parfaitement agité de 0,8 1. On introduit dans ce réacteur du cyclohexane, du butadiène, du styrène et de la tétraméthyléthylènediamine (TMEDA), selon des quantités massiques de 100/ 12,2/ 2,1/ 0,057, respectivement (la quantité de tétraméthyléthylènediamine dans le milieu réactionnel étant d'environ 500 ppm). On introduit en entrée de ligne 200 µmol de n-BuLi pour 100 g de monomères, afin de neutraliser les impuretés protiques apportées par les différents constituants présents dans cette entrée de ligne. A l'entrée du réacteur, on introduit 700 µmol de n-BuLi pour 100 g de monomères. On règle les différents débits de telle sorte que le temps de séjour moyen dans le réacteur soit de 40 min, et l'on maintient la température à 80° C.

On notera que le rapport molaire (TMEDA / n-BuLi) est ici sensiblement égal à 4,9.

Le taux de conversion, mesuré sur un prélèvement réalisé en sortie du réacteur, est de 98 % et la viscosité inhérente, mesurée à 0,1 g/dl dans le toluène, est de 2,05 dl/g. A la sortie du réacteur, on soumet le SBR obtenu à un traitement anti-oxydant, à l'aide de 0,2 pce de 2,2'-méthylène bis(4-méthyl-6-tertiobutylphénol) et de 0,2 pce de N-(1,3-diméthylbutyl)-N'-phényl-p-phénylènediamine (pce : parties en poids pour cent parties d'élastomère).

La masse moléculaire moyenne en nombre Mn du SBR linéaire obtenu, évaluée par la technique SEC précitée, est de 130 000 g/mol. L'indice de polymolécularité Ip est de 1,80.

La microstructure de ce SBR selon l'invention, déterminée par la technique RMN¹³C précitée, est telle qu'il présente, pour la partie butadiénique, une teneur massique en motifs vinyliques de 53 % et une teneur massique en motifs vinylcyclopentane de 10 %.

La Tg avant extension à l'huile de ce SBR selon l'invention est de -31° C.

Cet exemple montre qu'en l'absence de sel d'un métal alcalin d'un alcool aliphatique ou alicyclique dans le système catalytique, on n'obtient pas suite à la polymérisation (même effectuée en continu avec un rapport molaire (agent polaire / initiateur) supérieur à 3) un taux massique d'unités vinyliques cycliques au moins égal à 15 % pour un élastomère de masse moléculaire Mn élevée (supérieure à 100 000 g/mol).

| |
|---|
| **EXEMPLE 2 :** |
| **Préparation d'un SBR linéaire selon l'invention de haute masse moléculaire.** |

Ce SBR selon l'invention est préparé en continu dans des conditions identiques à celles de l'exemple 1, à ceci près que l'on introduit dans le réacteur, en plus des ingrédients ci-dessus, une solution de tertioamylate de sodium selon un rapport sodium/ lithium actif de 0,2.

On notera que le rapport molaire (TMEDA / n-BuLi) est ici sensiblement égal à 4,9.

Le taux de conversion, mesuré sur un prélèvement en sortie du réacteur, est de 97 %, et la viscosité inhérente du SBR obtenu, mesurée à 0,1 g/dl dans le toluène, est de 1,80 dl/g.

Le SBR linéaire obtenu présente une masse Mn de 120 000 g/mol et un indice Ip de 2,47.

Dans ce SBR linéaire selon l'invention, la teneur massique d'enchaînements styréniques est de 15 %. Pour la partie butadiénique, la teneur massique d'enchaînements vinyliques est de 53 % et la teneur massique en motifs vinylcyclopentane est de 23 %.

La Tg avant extension à l'huile de ce SBR selon l'invention est de -14° C.

Cet exemple montre qu'en incorporant un sel d'un métal alcalin d'un alcool aliphatique ou alicyclique dans le système catalytique, on obtient suite à la polymérisation (effectuée en continu avec un rapport molaire (agent polaire / initiateur) supérieur à 3) un taux massique d'unités vinyliques cycliques supérieur à 20 % pour un élastomère linéaire de masse moléculaire Mn supérieure à 100 000 g/mol.

| |
|---|
| **EXEMPLE 3 :** |
| **Préparation d'un SBR étoilé « témoin » de haute masse moléculaire.** |

Ce SBR est préparé en continu dans un réacteur parfaitement agité de 14 l.

On introduit dans ce réacteur du cyclohexane, du butadiène, du styrène et de la tétraméthyléthylènediamine, selon des quantités massiques de 100/ 13,6/ 0,7/ 0,17, respectivement (la quantité de tétraméthyléthylènediamine dans le milieu réactionnel étant d'environ 1500 ppm). On introduit en entrée de ligne 300 µmol de n-BuLi pour 100 g de monomères, afin de neutraliser les impuretés protiques apportées par les différents constituants présents dans cette entrée de ligne. A l'entrée du réacteur, on introduit 500 µmol de n-BuLi pour 100 g de monomères, de telle sorte que le rapport molaire (TMEDA / n-Buli) soit d'environ 20,5.

On règle les différents débits de telle sorte que le temps de séjour moyen dans le réacteur soit de 40 min, et l'on maintient la température à 80° C.

Le taux de conversion, mesuré sur un prélèvement réalisé en sortie du réacteur, est de 84 % et la viscosité inhérente du SBR linéaire obtenu, mesurée à 0,1 g/dl dans le toluène, est de 2,21 dl/g. La masse moléculaire Mn de ce SBR linéaire est de 135 000 g/mol.

A la sortie du réacteur, on introduit un agent d'étoilage constitué de tris-(2,4-di-tert-butylphényl)phosphite, puis on soumet ce SBR étoilé à un traitement anti-oxydant, à l'aide de 0,2 pce de 2,2'-méthylène bis(4-méthyl-6-tertiobutylphénol) et de 0,2 pce de N-(1,3-diméthylbutyl)-N'-phényl-p-phénylènediamine.

La masse moléculaire Mn de ce SBR étoilé est de 180 000 g/mol, et l'indice Ip est de 1,85.

Ce SBR étoilé présente une teneur massique en enchaînements styréniques de 5 %. Pour la partie butadiénique, il présente une teneur massique en motifs vinyliques de 60 % et une teneur massique en motifs vinylcyclopentane de 9 %.

La Tg avant extension à l'huile de ce SBR selon l'invention est de -34° C.

Cet exemple montre à nouveau qu'en l'absence de sel d'un métal alcalin d'un alcool aliphatique ou alicyclique dans le système catalytique, on n'obtient pas suite à la polymérisation (même effectuée en continu avec un rapport molaire (agent polaire / initiateur) très largement supérieur à 3) un taux massique d'unités vinyliques cycliques au moins égal à 15 % pour un élastomère linéaire de masse moléculaire Mn supérieure à 100 000 g/mol.

| |
|---|
| **EXEMPLE COMPARATIF 3bis :** |
| **Préparation d'un SBR étoilé « témoin » de haute masse moléculaire, exempt de motifs vinylcyclopentane.** |

Ce SBR est préparé en continu dans un réacteur parfaitement agité de 14 l.

On introduit dans ce réacteur du toluène, du butadiène, du styrène, du tétrahydrofuranne et du diméthoxyéthane, selon des quantités massiques de 100/ 10,15/ 4,15/ 0,68 /0,25 respectivement. On introduit en entrée de ligne 200 µmol de n-BuLi pour 100 g de monomères, afin de neutraliser les impuretés protiques apportées par les différents constituants présents dans cette entrée de ligne. A l'entrée du réacteur, on introduit 150 µmol de n-BuLi pour 100 g de monomères.

Le rapport molaire (agents polaires / n-BuLi) est d'environ 569.

On règle les différents débits de telle sorte que le temps de séjour moyen dans le réacteur soit de 40 min, et l'on maintient la température à 60° C.

Le taux de conversion, mesuré sur un prélèvement réalisé en sortie du réacteur, est de 87 % et la viscosité inhérente du SBR linéaire obtenu, mesurée à 0,1 g/dl dans le toluène, est de 2,61 dl/g. A la sortie du réacteur, on introduit un agent d'étoilage constitué de carbonate de propylène glycol, puis on soumet ce SBR étoilé à un traitement anti-oxydant, à l'aide de 0,2 pce de 2,2'-méthylène bis(4-méthyl-6-tertiobutylphénol) et de 0,2 pce de N-(1,3-diméthylbutyl)-N'-phényl-p-phénylènediamine.

La masse Mn de ce SBR étoilé est de 250 000 g/mol, et l'indice Ip est de 1,89.

Ce SBR étoilé « témoin » présente une teneur massique en enchaînements styréniques de 25 %. Pour la partie butadiénique, il présente une teneur massique en motifs vinyliques de 58 % et les motifs vinylcyclopentane ne sont pas détectés.

La Tg avant extension à l'huile de ce SBR « témoin » est de -24° C.

Cet exemple montre clairement qu'un solvant de polymérisation aromatique, tel que le toluène, ne convient pas pour obtenir des unités vinyliques cycliques dans l'élastomère diénique de haute masse obtenu.

| |
|---|
| **EXEMPLE 4 :** |
| **Préparation d'un SBR étoilé selon l'invention de haute masse moléculaire.** |

Ce SBR selon l'invention est préparé en continu dans des conditions identiques à celles décrites dans l'exemple 3, à ceci près que l'on introduit dans le réacteur, en plus des ingrédients ci-dessus, une solution de tertioamylate de sodium selon un rapport sodium/ lithium actif de 0,04, et que l'on introduit à l'entrée du réacteur 660 µmol de n-BuLi pour 100 g de monomères. Le rapport molaire (sodium / tétraméthyléthylènediamine) est égal à 0,002. Le taux de conversion, mesuré sur un prélèvement réalisé en sortie du réacteur, est de 90 %, et la viscosité inhérente du SBR linéaire obtenu, mesurée à 0,1 g/dl dans le toluène, est de 2,30 dl/g. Ce SBR linéaire présente une masse moléculaire Mn de 150 000 g/mol.

Le rapport molaire (TMEDA / n-BuLi) est d'environ 15,5.

On procède à l'étoilage de ce SBR comme indiqué à l'exemple 3.

Ce SBR étoilé présente une masse Mn de 260 000 g/mol et un indice Ip de 2,56.

La teneur massique de ce SBR étoilé selon l'invention en enchaînements styréniques est de 6 %. Pour la partie butadiénique, la teneur massique d'enchaînements vinyliques est de 57 % et la teneur massique en motifs vinylcyclopentane est de 22 %.

La Tg avant extension à l'huile de ce SBR selon l'invention est de -25° C.

Cet exemple montre qu'en incorporant un sel d'un métal alcalin d'un alcool aliphatique ou alicyclique dans le système catalytique, on obtient suite à la polymérisation (effectuée en continu avec un rapport molaire (agent polaire / initiateur) supérieur à 15) un taux massique d'unités vinyliques cycliques supérieur à 20 % pour un élastomère linéaire de masse moléculaire Mn égale à 150 000 g/mol.

| |
|---|
| **EXEMPLE 5 :** |
| **Préparation d'un BR étoilé selon l'invention de haute masse moléculaire.** |

Ce polybutadiène (BR) selon l'invention est préparé en continu dans des conditions identiques à celles décrites dans l'exemple 4, à ceci près que l'on introduit dans le réacteur une quantité de butadiène égale à 14,3 parties pour cent parties de cyclohexane, que l'on n'introduit pas de styrène dans ce réacteur et que l'on introduit à l'entrée du réacteur 600 µmol de n-BuLi pour 100 g de monomères.

Le rapport molaire (TMEDA / n-BuLi) est d'environ 17,1.

Le taux de conversion, mesuré sur un prélèvement réalisé en sortie du réacteur, est de 92 %, et la viscosité inhérente du BR linéaire obtenu, mesurée à 0,1 g/dl dans le toluène, est de 1,86 dl/g. La masse moléculaire Mn de ce BR linéaire est de 130 000 g/mol.

On introduit comme précédemment l'agent d'étoilage précité à la sortie du réacteur, avant de soumettre le BR étoilé obtenu au même traitement anti-oxydant.

Ce BR étoilé présente une masse Mn égale à 181 000 g/mol et un indice Ip égal à 2,89.

Ce BR étoilé selon l'invention présente une teneur massique d'enchaînements vinyliques de 56 % et une teneur massique en motifs vinylcyclopentane de 20 %.

La Tg avant extension à l'huile de ce BR selon l'invention est de -29° C.

Cet exemple montre également qu'en incorporant un sel d'un métal alcalin d'un alcool aliphatique ou alicyclique dans le système catalytique, on obtient suite à la polymérisation (effectuée en continu avec un rapport molaire (agent polaire / initiateur) supérieur à 15) un taux massique d'unités vinyliques cycliques égal à 20 % pour un polybutadiène linéaire de masse moléculaire Mn supérieure à 100 000 g/mol.

## Revendications

1. Procédé de préparation d'un élastomère diénique linéaire ou ramifié issu d'au moins un diène conjugué, ledit élastomère comportant des unités vinyliques cycliques selon un taux massique égal ou supérieur à 15 % et présentant avant ramification éventuelle une masse moléculaire moyenne en nombre appartenant à un domaine allant de 100 000 à 300 000 g/mol, **caractérisé en ce que** ledit procédé comprend la polymérisation anionique d'un ou de plusieurs monomères comprenant au moins un monomère diène conjugué par la réaction en continu, dans un solvant hydrocarboné inerte aliphatique ou alicyclique, dudit ou desdits monomères avec un système catalytique comprenant un initiateur organolithié, un agent polaire comportant plusieurs hétéro-atomes et un sel d'un métal alcalin d'un alcool aliphatique ou alicyclique, de manière que ledit système satisfasse à la fois aux trois conditions suivantes :
(i) le rapport molaire (agent polaire / initiateur) est égal ou supérieur à 3.
(ii) le rapport molaire (sel / initiateur) appartient à un domaine allant de 0,01 à 2, et
(iii) le rapport molaire (sel / agent polaire) appartient à un domaine allant de 0,001 à 0,5.

2. Procédé de préparation d'un élastomère diénique selon la revendication 1, **caractérisé en ce que** le rapport molaire (agent polaire / initiateur) est égal ou supérieur à 5.

3. Procédé de préparation d'un élastomère diénique selon la revendication 2, **caractérisé en ce que** le rapport molaire (agent polaire / initiateur) est égal ou supérieur à 10.

4. Procédé de préparation d'un élastomère diénique selon la revendication 3, **caractérisé en ce que** le rapport molaire (agent polaire / initiateur) est égal ou supérieur à 15.

5. Procédé de préparation d'un élastomère diénique selon une des revendications 1 à 4, **caractérisé en ce que** ledit rapport molaire (sel / agent polaire) appartient à un domaine allant de 0,001 à 0,1.

6. Procédé de préparation d'un élastomère diénique selon une des revendications 1 à 5, **caractérisé en ce que** ledit rapport molaire (sel / initiateur) appartient à un domaine allant de 0,01 à 0,6.

7. Procédé de préparation d'un élastomère diénique selon la revendication 6, **caractérisé en ce que** ledit rapport molaire (sel / initiateur) appartient à un domaine allant de 0,01 à 0,2.

8. Procédé de préparation d'un élastomère diénique selon une des revendications 1 à 7, **caractérisé en ce que** ledit agent polaire appartient au groupe constitué par les diamines et les diéthers.

9. Procédé de préparation d'un élastomère diénique selon la revendication 8, **caractérisé en ce que** ledit agent polaire est la tétraméthyléthylènediamine.

10. Procédé de préparation d'un élastomère diénique selon une des revendications 1 à 9, **caractérisé en ce que** ledit sel est un sel de sodium d'un alcool aliphatique présentant de 3 à 12 atomes de carbone, tel que le tert-amylate de sodium.

11. Procédé de préparation d'un élastomère diénique selon une des revendications 1 à 10, **caractérisé en ce qu'**il comprend en outre la réaction du produit de ladite polymérisation avec un agent de couplage ou d'étoilage, pour l'obtention d'un élastomère diénique ramifié.

12. Procédé de préparation d'un élastomère diénique selon une des revendications 1 à 11, **caractérisé en ce que** ledit élastomère préparé comprend une fraction massique d'unités issues de monomères diènes conjugués supérieure à 30 %.

13. Procédé de préparation d'un élastomère diénique selon une des revendications 1 à 12, **caractérisé en ce que** ledit élastomère préparé est constitué d'un homopolymère du butadiène ou d'un copolymère du butadiène et d'un vinyl aromatique.

## Claims

1. A process for the production of a linear or branched diene elastomer resulting from at least one conjugated diene, said elastomer comprising cyclic vinyl units in a mass content of greater than or equal to 15% and, prior to optional branching, having a number-average molecular weight falling within a range of from 100,000 to 300,000 g/mol, **characterised in that** said process comprises the anionic polymerisation of one or more monomers comprising at least one conjugated diene monomer, by the continuous reaction, in an inert aliphatic or alicyclic hydrocarbon solvent, of said monomer or monomers with a catalytic system comprising an organolithium initiator, a polar agent comprising two or more heteroatoms, and an alkali metal salt of an aliphatic or alicyclic alcohol, such that said system simultaneously satisfies the following three conditions:
(i) the (polar agent:initiator) molar ratio is greater than or equal to 3.
(ii) the (salt:initiator) molar ratio falls within a range of from 0.01 to 2, and
(iii) the (salt:polar agent) molar ratio falls within a range of from 0.001 to 0.5.

2. A process for the production of a diene elastomer according to Claim 1, **characterised in that** the (polar agent:initiator) molar ratio is greater than or equal to 5.

3. A process for the production of a diene elastomer according to Claim 2, **characterised in that** the (polar agent:initiator) molar ratio is greater than or equal to 10.

4. A process for the production of a diene elastomer according to Claim 3, **characterised in that** the (polar agent:initiator) molar ratio is greater than or equal to 15.

5. A process for the production of a diene elastomer according to one of Claims 1 to 4, **characterised in that** said (salt:polar agent) molar ratio falls within a range of from 0.001 to 0.1.

6. A process for the production of a diene elastomer according to one of Claims 1 to 5, **characterised in that** said (salt:initiator) molar ratio falls within a range of from 0.01 to 0.6.

7. A process for the production of a diene elastomer according to Claim 6, **characterised in that** said (salt:initiator) molar ratio falls within a range of from 0.01 to 0.2.

8. A process for the production of a diene elastomer according to one of Claims 1 to 7, **characterised in that** said polar agent belongs to the group consisting of diamines and diethers.

9. A process for the production of a diene elastomer according to Claim 8, **characterised in that** said polar agent is tetramethylethylenediamine.

10. A process for the production of a diene elastomer according to one of Claims 1 to 9, **characterised in that** said salt is a sodium salt of an aliphatic alcohol having from 3 to 12 carbon atoms, such as sodium tert.-amylate.

11. A process for the production of a diene elastomer according to one of Claims 1 to 10, **characterised in that** it further involves reacting the product of said polymerisation with a coupling or starring agent in order to obtain said branched diene elastomer.

12. A process for the production of a diene elastomer according to one of Claims 1 to 11, **characterised in that** said prepared elastomer comprises a mass fraction of units resulting from conjugated dienes of greater than 30%.

13. A process for the production of a diene elastomer according to one of Claims 1 to 12, **characterised in that** prepared elastomer consists of a homopolymer of butadiene or a copolymer of butadiene and a vinyl aromatic compound.

## Patentansprüche

1. Verfahren zur Herstellung eines linearen oder verzweigten Dienelastomers aus mindestens einem konjugierten Dien, wobei das Elastomer cyclische Vinyleinheiten in einem Massenanteil größer gleich 15% umfasst und vor der fakultativen Verzweigung eine zahlenmittlere Molmasse im Bereich von 100.000 bis 300.000 g/mol aufweist, **dadurch gekennzeichnet, dass** man ein oder mehrere Monomere, die mindestens ein kojugiertes Dienmonomer umfassen, anionisch polymerisiert, indem man das oder die Monomere in einem inerten aliphatischen oder alicyclischen Kohlenwasserstoff-Lösungsmittel mit einem katalytischen System, das einen Organolithium-Initiator, ein polares Agens mit mehreren Heteroatomen und ein Alkalimetallsalz eines aliphatischen oder alicyclischen Alkohols umfasst, kontinuierlich umsetzt, wobei das System gleichzeitig die folgenden drei Bedigungen erfüllt:
(i) das Molverhältnis (polares Agens/Initiator) ist größer gleich 3,
(ii) das Molverhältnis (Salz/Initiator) liegt im Bereich von 0,01 bis 2, und
(iii) das Molverhältnis (Salz/polares Agens) liegt im Bereich von 0,001 bis 0,5.

2. Verfahren zur Herstellung eines Dienelastomers nach Anspruch 1, **dadurch gekennzeichnet, dass** das Molverhältnis (polares Agens/Initiator) größer gleich 5 ist.

3. Verfahren zur Herstellung eines Dienelastomers nach Anspruch 2, **dadurch gekennzeichnet, dass** das Molverhältnis (polares Agens/Initiator) größer gleich 10 ist.

4. Verfahren zur Herstellung eines Dienelastomers nach Anspruch 3, **dadurch gekennzeichnet, dass** das Molverhältnis (polares Agens/Initiator) größer gleich 15 ist.

5. Verfahren zur Herstellung eines Dienelastomers nach einem der Ansprüche 1 bis 4, **dadurch gekennzeichnet, dass** das Molverhältnis (Salz/polares Agens) im Bereich von 0,001 bis 0,1 liegt.

6. Verfahren zur Herstellung eines Dienelastomers nach einem der Ansprüche 1 bis 5, **dadurch gekennzeichnet, dass** das Molverhältnis (Salz/Initiator) im Bereich von 0,01 bis 0,6 liegt.

7. Verfahren zur Herstellung eines Dienelastomers nach Anspruch 6, **dadurch gekennzeichnet, dass** das Molverhältnis (Salz/Initiator) im Bereich von 0,01 bis 0,2 liegt.

8. Verfahren zur Herstellung eines Dienelastomers nach einem der Ansprüche 1 bis 7, **dadurch gekennzeichnet, dass** das polare Mittel zu der durch Diamine und Diether gebildeten Gruppe gehört.

9. Verfahren zur Herstellung eines Dienelastomers nach Anspruch 8, **dadurch gekennzeichnet, dass** es sich bei dem polaren Agens um Tetramethylethylendiamin handelt.

10. Verfahren zur Herstellung eines Dienelastomers nach einem der Ansprüche 1 bis 9, **dadurch gekennzeichnet, dass** es sich bei dem Salz um ein Natriumsalz eines aliphatischen Alkohols mit 3 bis 12 Kohlenstoffatomen wie Natrium-tert.-amylat handelt.

11. Verfahren zur Herstellung eines Dienelastomers nach einem der Ansprüche 1 bis 10, **dadurch gekennzeichnet, dass** man außerdem das Reaktionsprodukt der Polymerisation mit einem Kupplungs- oder Sternverzweigungsmittel zu einem verzweigten Dienelastomer umsetzt.

12. Verfahren zur Herstellung eines Dienelastomers nach einem der Ansprüche 1 bis 11, **dadurch gekennzeichnet, dass** das hergestellte Elastomer einen Massenanteil an Einheiten, die sich von konjugierten Dienmonomeren ableiten, von mehr als 30% umfasst.

13. Verfahren zur Herstellung eines Dienelastomers nach einem der Ansprüche 1 bis 12, **dadurch gekennzeichnet, dass** es sich bei dem hergestellten Elastomer um ein Homopolymer von Butadien oder ein Copolymer von Butadien und einem Vinylaromaten handelt.
